# FASCICULE DE BREVET EUROPEEN

(11) **EP 0 791 141 B1**
(45) Date de publication et mention de la délivrance du brevet: **09.02.2000**
(21) Numéro de dépôt: 95939333.1
(22) Date de dépôt: 07.11.1995
(51) Int. Cl.: F16B 39/282, F01D 21/00, F02B 77/00

(54) **DISPOSITIF D'OBTURATION A VERROUILLAGE AUTO-ACTIVABLE**
SELBSTVERRIEGELBARE VERSCHLUSSVORRICHTUNG
SELF-LOCKING SEALING DEVICE

(30) Priorité: 08.11.1994 FR 9413391
(43) Date de publication de la demande: 27.08.1997
(73) Titulaire: JPB SYSTEME, 77170 Brie-Comte-Robert (FR)
(72) Inventeur: BARRE, Bernard, F-94140 Alfortville (FR); MARC, Jean-Pierre, F-77370 Nangis (FR)
(74) Mandataire: Pontet, Bernard
(86) Numéro de dépôt international: FR9501461
(87) Numéro de publication internationale: WO9614516

(56) Documents cités:
- GB-A- 863 147
- GB-A- 1 579 730
- US-A- 2 997 090
- US-A- 3 866 878
- US-A- 4 815 276
- Book no. 4, 10.1991, 'MECHANISCHE VERBINDUNGSELEMENTE 4; PAGES 256, 257,276,277', DIN DEUTSCHES INSTUTUT FüR NORMUNG E. V. BEUTH VERLAG GMBH, BERLIN, KöLN

## Description

La présente invention concerne un dispositif d'obturation à bouchon dont le vissage permet un verrouillage automatique empêchant le dévissage spontané.

En aéronautique, un moteur d'avion nécessite un entretien régulier et des visites d'inspection très rigoureuses, afin d'assurer une parfaite fiabilité du moteur lors de son fonctionnement. Pour pouvoir contrôler les pièces internes ainsi que leur usure éventuelle, des orifices sont prévus dans le carter du moteur. Lors des opérations de maintenance, un bouchon obturant l'orifice est dévissé et un endoscope peut être enfilé pour l'exploration des cavités internes et l'observation de l'état des pièces du moteur. On évite ainsi l'ouverture du carter et le démontage complet du moteur.

Les bouchons de ce genre, également appelés "bouchons endoscopes", habituellement utilisés possèdent un filetage et ils se vissent à l'aide d'une clef dynamométrique sur le carter comportant un filetage correspondant.

Lorsque le moteur tourne, son fonctionnement génère des vibrations pouvant provoquer le desserrage des pièces vissées et plus particulièrement le desserrage des bouchons endoscopes.

On connaît certes différents moyens pour éviter une telle avarie. Ces moyens peuvent consister à placer une pièce rapportée en contact avec le bouchon, avant ou après le serrage. Les pièces utilisées sont du type rondelle de freinage, ou du type goupille ou fil de verrouillage.

Toutefois, l'accessibilité des bouchons dans un moteur peut être très mauvaise, car des tubulures et autres organes périphériques viennent encombrer l'espace autour du carter. Ainsi, la mise en place d'une pièce supplémentaire de freinage ou de verrouillage sur un bouchon demande une grande dextérité et même de la chance pour éviter de perdre ladite pièce. Dans certains cas, le bouchon n'est accessible qu'à l'aide d'un long outil, tout accès manuel direct au bouchon est même impossible lorsque le bouchon est en place. On connaît aussi des systèmes de freinage qui pourraient être montés à demeure sur le bouchon. Mais ces systèmes de freinage ne sont pas totalement fiables, surtout après plusieurs cycles de vissage et dévissage.

Le US-A-2 997 090 décrit un dispositif pour verrouiller dans une position quelconque relativement à un alésage taraudé une tige filetée dont l'extrémité forme butée réglable. Une bague de verrouillage entourant la tige comporte un doigt engagé dans une rainure axiale de la tige. Cette bague, qui est ainsi liée en rotation à la tige, comporte une face dentée. Un ressort pousse la bague vers un épaulement solidaire de l'alésage et comportant des dents complémentaires. Ainsi, quelle que soit la position de la tige dans l'alésage, la bague verrouille la tige relativement à l'alésage. Pour effectuer un réglage, on applique à la tige un couple de rotation suffisant pour que les dents de la bague franchissent les dents de l'épaulement, avec en même temps compression spontanée du ressort. Ce dispositif serait inapproprié pour verrouiller un bouchon car il rendrait très pénible et difficile une manoeuvre complète de rotation sur plusieurs tours pour visser et dévisser le bouchon, surtout si celui-ci est peu accessible. En outre, ce dispositif supprimerait au moins partiellement la sensation de serrage du bouchon, d'où un grave risque de fermeture défectueuse du bouchon, notamment en cas de mauvaise accessibilité.

Le but de l'invention est de remédier à ces inconvénients en proposant un dispositif d'obturation comportant un système d'arrêt, s'opposant à tout dévissage intempestif sous l'effet de vibrations produites notamment par un moteur tel qu'un moteur d'avion, qui soit directement intégré au dispositif d'obturation, et qui ne soit pas une gêne ou un risque pour les manoeuvres d'ouverture et de fermeture, même en cas de mauvaise accessibilité.

Selon l'invention le dispositif d'obturation comportant un bouchon destiné à être placé sur un orifice ou en être enlevé, respectivement par vissage et dévissage, comprenant un corps portant un filetage, et des moyens d'arrêt s'opposant au dévissage spontané du bouchon, est caractérisé en ce que lesdits moyens sont des moyens de verrouillage et de déverrouillage automatiquement activés par la rotation du bouchon et sa progression correspondante dans le sens de l'axe.

Ainsi, lors du mouvement du bouchon vers la position de fermeture et à partir de celle-ci, les moyens de verrouillage et de déverrouillage respectifs sont mis progressivement en action, de manière concomitante avec le mouvement, sans qu'il y ait intervention de l'opérateur.

De préférence, les moyens de verrouillage sont du type à encliquetage réversible prévus pour que, à partir d'un état vissé verrouillé du bouchon, le couple nécessaire au déverrouillage dans le sens du dévissage soit supérieur au couple nécessaire pour vaincre l'encliquetage dans le sens d'un vissage supplémentaire du bouchon. Par "encliquetage réversible" on entend un encliquetage pouvant être libéré par application d'un effort suffisant sur le bouchon dans le sens du dévissage.

De manière particulièrement avantageuse, le verrouillage et le déverrouillage sont assurés par un dispositif à cliquet comportant une pièce mobile appartenant au bouchon et une bague fixée sur le carter, toutes les deux présentant un profil dentelé.

Afin d'éviter le desserrage parasite par vibrations et permettre le desserrage volontaire du bouchon par l'opérateur, le profil dentelé de la pièce mobile est appliqué par un ressort contre le profil dentelé identique de la bague fixe du carter. Il en résulte une interpénétration des dentures qui s'oppose à la rotation spontanée du bouchon.

De plus, l'opérateur lors du montage ou du démontage sent cliqueter le dispositif, et peut donc être rassuré sur le bon fonctionnement du système de verrouillage.

D'autres particularités et avantages de l'invention ressortiront encore de la description ci-après, relative à des exemples non-limitatifs. Aux dessins annexés :
- la figure 1 est une vue d'un dispositif d'obturation, avec arrachements et vue partielle en coupe ;
- la figure 2 est une vue du dispositif d'obturation de la figure 1 placé sur un carter de moteur, avec coupe partielle, montrant les moyens de verrouillage et de déverrouillage ;
- la figure 3 est une vue en coupe transversale selon la direction III - III de la figure 2 ;
- la figure 4 est une vue en coupe axiale d'une partie des moyens de verrouillage et de déverrouillage ; et
- la figure 5 est une vue en perspective de l'organe de verrouillage mobile dentelé.

Dans l'exemple présenté aux figures, le bouchon endoscope 1 est de forme générale circulaire et comprend un corps central 11 portant rigidement à sa base une partie filetée mâle 2. Le bouchon endoscope se visse par sa partie filetée 2 dans un filetage femelle conjugué 7 formé dans le paroi d'un orifice 6 pratiqué à travers un bossage 4 du carter 3 d'un moteur. Les filetages 2 et 7 sont standards et en particulier ne comportent aucune interruption du genre rainure axiale ou méplat.

A son extrémité opposée à la partie filetée 2, le corps central 11 porte rigidement un embout 10 muni d'une empreinte 8 pour recevoir la tête d'une clef de vissage et de dévissage du bouchon. Un couple de serrage prédéterminé peut être assuré grâce à l'emploi d'une clef dynamométrique.

Lors des opérations de maintenance, le bouchon endoscope est dévissé et un endoscope (non représenté) peut être inséré par l'orifice 6 dans la cavité 9 afin d'inspecter les pièces internes du moteur.

Autour du corps central 11 sont agencés des moyens de verrouillage et de déverrouillage 12 et des moyens de protection 13.

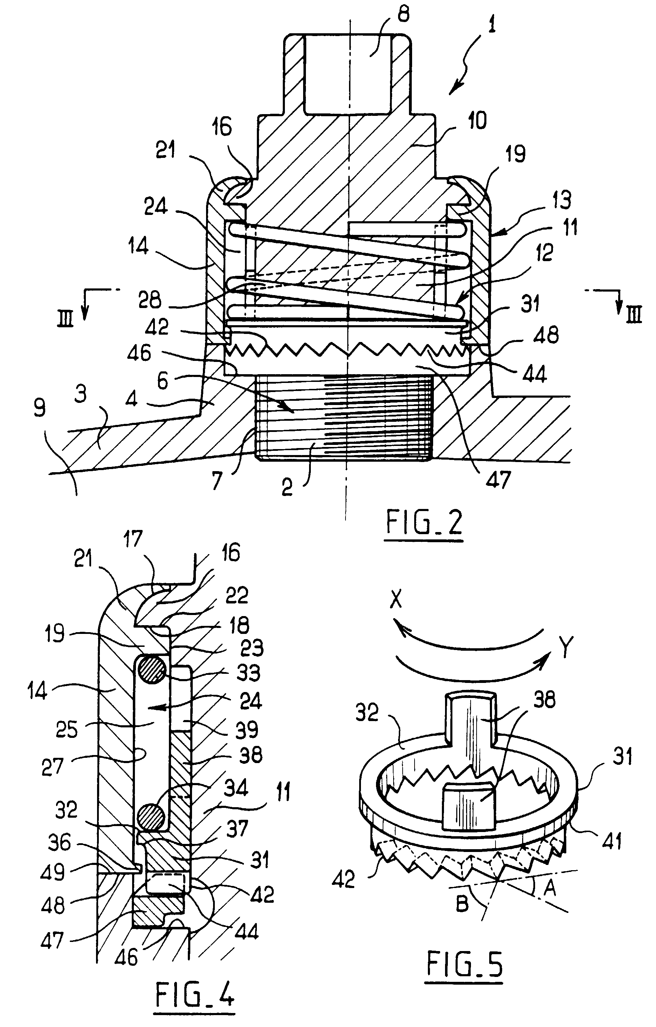

Les moyens de protection comprennent une jupe de protection cylindrique 14 placée par sertissage autour du corps central 11 du bouchon endoscope. A cet effet, le corps central 11 a une collerette 16 (Fig. 2 et 4) faisant saillie vers l'extérieur à proximité de l'embout 10 et à une certaine distance axiale de la partie du filetée 2.

La collerette 16 (fig. 4) est délimitée du côté de la partie filetée 2 par un épaulement 18 et de l'autre côté par une face 17 ayant une section en arc de cercle.

La jupe 14 présente sur sa face interne, dans la région de son extrémité de sertissage dirigée vers l'empreinte 8, une nervure annulaire 19 de section carrée, formant un épaulement 22 du côté tourné vers l'empreinte 8. Au-delà de cette nervure 19, la jupe 14 se termine par une lèvre de sertissage 21.

Le sertissage s'opère en plaçant d'abord l'épaulement 22 de la nervure 19 contre l'épaulement 18 rectiligne de la collerette 16 du corps central, de façon que la face radialement intérieure 23 de la nervure 19 se centre contre la paroi périphérique du corps central 11.

Ensuite, on rabat par déformation plastique la lèvre 21 contre la face 17 en arc de cercle de la collerette 16, de façon à sertir définitivement la jupe 14 sur le corps central 11 du bouchon. La jupe 14 est donc rendue rigidement solidaire du corps 11.

Un logement annulaire 24 est défini entre la paroi externe du corps central 11 et la paroi interne 27 de la jupe 14. Le logement 24 s'étend axialement entre la nervure 19 de la jupe et un bord libre 48 qui termine la jupe 14 à son extrémité opposée au sertissage. Le bord libre 48 est situé sensiblement dans le même plan perpendiculaire à l'axe, que la jonction entre le corps 11 et la partie filetée 2. Le logement 24 est ouvert du côté du bord libre 48 et fermé du côté du sertissage de la jupe 14. Lorsque le bouchon est à l'état vissé dans l'orifice, le bord libre 48 de la jupe 14 sert de butée de vissage en s'appuyant sur une face plane annulaire 49 prévue sur le bossage 4 autour de l'orifice 6.

Lors de cet appui en butée, la force du serrage du bouchon, résultant du vissage, est transmise de la collerette 16 à la nervure 19 par appui mutuel des épaulements 18 et 22, et du bord libre 48 de la jupe 14 à la face annulaire plane 49 du carter. La jupe 14 fonctionne donc en entretoise tubulaire entre le corps central 11 et le carter.

L'empreinte 8 est borgne, et ne donne donc aucun accès à l'intérieur du bouchon. En outre, le sertissage par la lèvre 21 de la jupe 14 sur le corps 11 est sensiblement étanche, de même que l'appui du bord libre 48 sur la face annulaire plane 49 lorsque le bouchon est vissé. Ainsi, lorsque le bouchon est vissé, l'intérieur du bouchon et notamment le logement 24 sont protégés de la pollution et de l'encrassement.

Le corps central 11 présente sur sa paroi périphérique entourée par la jupe 14 un épaulement 29 tourné vers la partie filetée 2. L'épaulement 29 délimite dans le logement 24 une première région 25 relativement étroite, radialement, et une deuxième région 26 qui est radialement plus large et plus éloignée du sertissage de la jupe 14.

Les moyens de verrouillage et de déverrouillage 12 sont placés dans l'espace intérieur du bouchon qui est clos comme il vient d'être dit, lorsque le bouchon est en place, et notamment dans le logement 24.

Les moyens de verrouillage et de déverrouillage 12 comprennent une bague 31 montée axialement coulissante autour du corps central 11 à l'intérieur de la deuxième région 26 du logement 24. La bague 31 a un diamètre interne et un diamètre externe sensiblement égaux à ceux de la deuxième région 26 du logement 24, respectivement.

Les moyens de verrouillage et déverrouillage 12 comprennent en outre un ressort hélicoïdal de compression 28 placé dans le logement 24 autour du corps central 11. Il s'appuie par une extrémité 33 contre la nervure 19 de la jupe 14 et par l'autre extrémité 34 contre la bague 31.

Le diamètre du fil du ressort est très légèrement inférieur à la dimension radiale de la première région 25 du logement 24.

La bague 31 et le ressort 28 sont prisonniers de l'ensemble formé par le corps central 11 et la jupe 14, même lorsque le bouchon est séparé de l'orifice 6. Pour cela, la jupe 14 comporte le long de son bord libre 48 un rebord annulaire intérieur 36 servant de butée pour un épaulement 37 de la bague 31 (Fig. 4). Lorsque le bouchon 1 est séparé de l'orifice 6, le ressort 28 maintient la bague 31 en appui par son épaulement 37 contre le rebord 36.

Afin d'empêcher la bague 31 de tourner par rapport au corps central 11, la bague 31 porte rigidement deux clavettes de maintien 38 plates, diamétralement opposées, orientées axialement vers l'embout 10, donc vers l'intérieur du logement 24 à partir d'une face 32 de la bague 31 sur laquelle s'appuie le ressort 28.

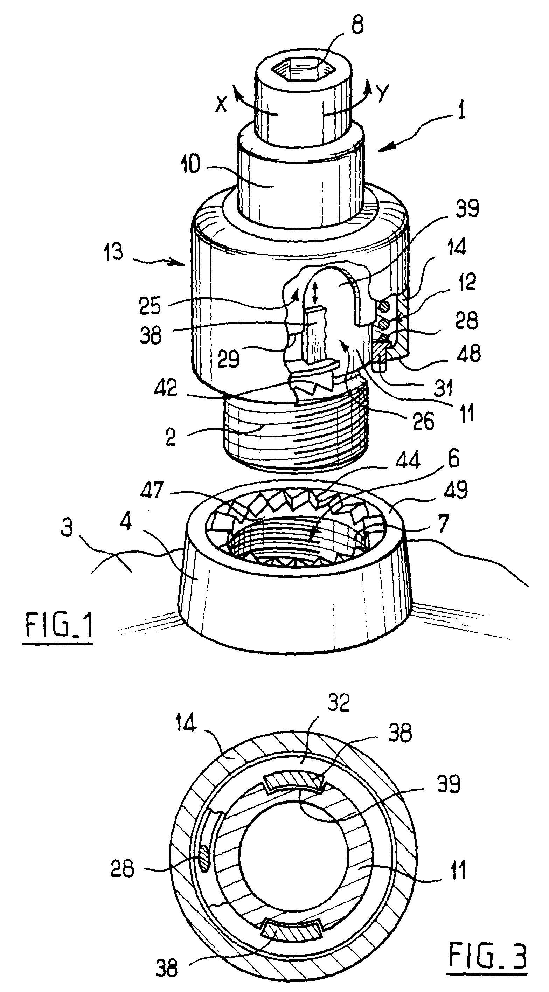

Ces deux clavettes 38 sont adjacentes au pourtour intérieur de la bague 31 et leur épaisseur radiale est égale à celle de l'épaulement 29. Elles peuvent ainsi s'étendre à l'intérieur du ressort 28 sans interférer avec les spires de celui-ci. Elles coulissent dans deux rainures 39 correspondantes (Fig. 1 et 2) formées dans la face externe du corps central 11 sous la forme d'échancrures partant de l'épaulement 29 vers l'embout 10, donc le long de la première région 25 du logement 24. Les rainures 39 ont la même profondeur radiale que l'épaulement 29.

La bague 31 présente sur sa face 41 tournée vers l'extérieur du logement 24 une denture régulière 42, de hauteur égale, disposée sur tout le pourtour de la bague 31. La denture 42 a un diamètre extérieur inférieur au diamètre intérieur du rebord 36 de la jupe 14. Ceci permet à la denture 42 de faire saillie axialement hors du logement 24 lorsque la bague 31 est en butée contre le rebord 36.

Les dents de la denture 42 sont de forme asymétrique. Comme le montre plus précisément la figure 5, chaque dent a, relativement au sens de vissage X, une face antérieure faisant avec un plan radial un angle A inférieur à l'angle B formé par une face postérieure de la même dent avec le même plan.

Les angles A et B sont par exemple de 30° et 45° environ. Du fait des deux angles A et B différents, les dents présentent une face longue et une face plus courte.

Sur le carter 3, les moyens de verrouillage 12 comprennent une denture 44 identique tournée axialement vers l'extérieur de l'orifice 6. La denture 44 est formée sur une bague 47, de taille sensiblement égale à la bague 31, montée fixement dans un dégagement 46 formé dans le bossage 4 autour de l'orifice 6. Les sommets des dents de la denture 44 sont sensiblement dans le plan de la face 49, qui entoure la denture.

La bague 47 peut présenter sur sa face extérieure des aspérités telles que crans ou cannelures (non représentés) permettant d'obtenir une bonne solidarisation avec le carter 3 à la suite d'un montage effectué à force dans le dégagement 46 à l'aide d'un mandrin poussoir ou d'un maillet. La bague dentée 47 ne nécessite aucune modification du carter car le dégagement 46 est de toute façon prévu.

Le fonctionnement est le suivant :

Lorsque le bouchon est séparé du carter 3, le mécanisme de verrouillage est protégé mécaniquement, d'une part par la jupe 14 et d'autre part par le pourtour du bossage 4 qui entoure la bague 47.

L'utilisateur place le bouchon endoscope 1 sur le bossage 4 du carter 3 et commence à visser, au besoin avec une clef dynamométrique.

Après un certain nombre de tours dans le sens X, alors que la bague 31 est en butée contre le rebord 36, la denture 42 atteint la denture 44 identique de la bague 47 fixe du carter. Les dents des dentures 42 et 44 s'entrechoquent par leurs faces peu inclinées (inclinaison A) qui forment rampe repoussant la denture 42 vers l'intérieur du logement 24, avec compression du ressort hélicoïdal 28.

Le ressort 28, de plus en plus comprimé, pousse de plus en plus la bague coulissante 31 axialement vers la bague fixe 47. Un cliquetis rassure l'utilisateur quant au bon fonctionnement du système de verrouillage.

Pendant le serrage, l'effet de rampe par les faces de pente A égale à, par exemple, 30° perturbe peu le couple de serrage prédéterminé au départ.

Le serrage définitif est réalisé lorsque le bord libre 48 de la jupe 14 est serré contre la face de serrage 49 du bossage 4 du carter. La jupe 14 joue alors le rôle d'entretoise entre le bossage 4 du carter et le corps central 11 en s'appuyant sur la face de serrage 49 et sur la collerette 16 du corps central 11. La jupe 14 protège ensuite le mécanisme de toute pollution et assure de plus l'étanchéité du bouchon 1.

Le verrouillage est donc réalisé par encliquetage, chaque dent de la denture 42 se comportant comme un cliquet vis-à-vis de la denture 44. Le processus d'encliquetage s'amorce du seul fait de la rotation du bouchon et de sa progression axiale correspondante vers le carter, sans nécessiter aucune manipulation spécifique de la part de l'utilisateur. Ensuite, tout desserrage intempestif du bouchon est évité, même sous l'action des vibrations.

L'efficacité du verrouillage est quasiment indépendante du couple de serrage. Elle résulte de l'appui mutuel des faces fortement inclinées (inclinaison B) des dents de la denture 42 avec les mêmes faces des dents de la denture 44. Mais comme l'inclinaison de ces dents est tout de même nettement inférieure à 90°, le verrouillage par encliquetage est réversible, c'est à dire qu'un déverrouillage est possible en appliquant au bouchon un couple dans le sens Y du dévissage. Ce couple est plus important que celui qui avait été nécessaire pour vaincre la résistance des moyens de verrouillage dans le sens d'un vissage supplémentaire au cours de l'opération de vissage. A part cela, le desserrage s'opère de manière semblable au vissage, les dents des dentures 42 et 44 se franchissant mutuellement avec chaque fois compression du ressort 28.

Le bouchon endoscope présente les avantages annexes de ne pas nécessiter de lubrifiants et d'être facilement démontable et réparable sans avoir à démonter l'ensemble du moteur.

Pour la fabrication du bouchon, on monte le ressort 28 et la bague 31 dans la jupe 14, puis on en fait un sous-ensemble en formant le rebord 36 de la jupe 14, par matage du bord libre 48. On réunit ensuite ledit sous-ensemble et le corps central 11 en sertissant la lèvre 21. Le dispositif selon l'invention est applicable sans aucune modification des standards, notamment ceux de l'aviation. Les filetages restent standards.

Bien entendu, l'invention n'est pas limitée aux exemples décrits et représentés.

Le profil de denture choisi pour les bagues 31 et 47 peut être modifié. On peut si on le désire augmenter ou diminuer les angles de 30° pour le vissage et de 45° pour le dévissage.

On peut faire varier le couple de serrage et de desserrage en changeant le ressort 28, la pente plus ou moins importante des dentures, et le coefficient de frottement des matériaux en contact.

La course du dispositif mobile peut être variable suivant la demande.

Des soudures peuvent en outre remplacer les sertissages.

L'invention serait applicable à un bouchon comportant un filetage femelle destiné à coopérer avec un bossage fileté extérieurement.

## Revendications

1. Dispositif d'obturation comportant un bouchon (1) destiné à être placé sur un orifice fileté (6) ou en être enlevé, respectivement par vissage et dévissage, comprenant un corps (11) portant un filetage (2), et des moyens d'arrêt (12) s'opposant au dévissage spontané du bouchon, caractérisé en ce que les moyens d'arrêt sont des moyens de verrouillage et de déverrouillage (31, 28, 47) automatiquement activés par la rotation du bouchon (1) et sa progression correspondante dans le sens de l'axe.

2. Dispositif d'obturation selon la revendication 1, caractérisé en ce que les moyens de verrouillage et de déverrouillage (31, 28, 47) sont des moyens d'encliquetage réversible.

3. Dispositif d'obturation selon la revendication 2, caractérisé en ce que les moyens d'encliquetage réversible comprennent deux organes de verrouillage (31, 47) solidaires en rotation l'un du bouchon (1) et l'autre de l'orifice (6), et en ce que ces deux organes de verrouillage sont positionnés pour s'interpénétrer axialement lorsque le bouchon (1) ferme l'orifice (6), sous la poussée d'un moyen de rappel (28) sollicitant un premier (31) de ces organes de verrouillage en direction de l'autre (47).

4. Dispositif d'obturation selon la revendication 3, caractérisé en ce que les moyens d'encliquetage réversible sont agencés pour que, à partir d'un état vissé et verrouillé du bouchon, le couple à appliquer au bouchon (1) pour le déverrouillage par dévissage est supérieur au couple à appliquer pour déverrouiller dans le sens d'un vissage supplémentaire.

5. Dispositif d'obturation selon la revendication 3 ou 4, caractérisé en ce que lorsque le bouchon (1) est à l'état vissé verrouillé, les moyens d'encliquetage réversible (31, 47) définissent, par leur interpénétration axiale, un premier appui mutuel s'opposant au dévissage spontané, par appui de deux faces de contact inclinées d'un premier angle (B) relativement grand inférieur à 90° par rapport à un plan radial, et un deuxième appui mutuel tendant à contrarier un vissage supplémentaire, par deux rampes inclinées d'un deuxième angle (A) par rapport au plan radial, plus petit que le premier angle (B).

6. Dispositif d'obturation selon l'une des revendications 3 à 5, caractérisé en ce que l'un au moins des organes de verrouillage (31, 47) comporte une denture annulaire (42, 44) dont les dents sont orientées sensiblement axialement.

7. Dispositif d'obturation selon l'une des revendications 3 à 6, caractérisé en ce que ledit premier organe de verrouillage (31), sollicité par le moyen de rappel (28), est guidé relativement au filetage (2) auquel il est associé, par des moyens de guidage (38, 39) localisés à l'écart dudit filetage associé (2) .

8. Dispositif d'obturation selon l'une des revendications 3 à 7, caractérisé en ce que le moyen de rappel (28) appartient au bouchon (1) et sollicite axialement vers l'intérieur de l'orifice (6) l'organe de verrouillage (31) solidaire en rotation du bouchon (1) .

9. Dispositif d'obturation selon la revendication 8, caractérisé en ce que l'organe de verrouillage (31) du bouchon est guidé en coulissement sur un corps (11) du bouchon, dont le filetage (2) est solidaire, le corps (11) et l'organe de verrouillage du bouchon étant en outre munis de moyens de liaison mutuelle en rotation.

10. Dispositif d'obturation selon la revendication 9, caractérisé en ce que le corps (11) du bouchon est aligné axialement avec une partie filetée mâle (2) munie du filetage, de sorte que le corps (11) se trouve à l'extérieur de l'orifice lorsque le bouchon est en position de fermeture relativement à l'orifice.

11. Dispositif selon la revendication 9 ou 10, caractérisé en ce que le moyen de rappel (28) est un ressort hélicoïdal monté autour du corps (11) entre un épaulement et l'organe de verrouillage (31), réalisé en forme de bague.

12. Dispositif d'obturation selon l'une des revendications 9 à 11, caractérisé en ce que pour son guidage en coulissement et sa liaison en rotation, l'organe de verrouillage (31) du bouchon comporte, du côté opposé à l'orifice, des clavettes (38) engagées dans des rainures (39) formées dans le corps (11).

13. Dispositif d'obturation selon l'une des revendications 8 à 12, caractérisé en ce que le bouchon (1) comprend une jupe (14) entourant extérieurement l'organe de verrouillage (31) solidaire du bouchon et le moyen de rappel (28), et en ce que la jupe (14) présente un rebord (36) dirigé radialement vers l'intérieur, et limitant la course en translation axiale, sous la poussée du moyen de rappel (28), de l'organe de verrouillage (31) solidaire en rotation du bouchon.

14. Dispositif selon la revendication 13, caractérisé en ce que lorsque le bouchon est vissé, la jupe (14) vient par un bord libre en relation sensiblement étanche avec une région périphérique (49) de l'orifice (6) de manière à enfermer les moyens de verrouillage et déverrouillage.

15. Dispositif d'obturation selon la revendication 13 ou 14, caractérisé en ce que le rebord (36) est réalisé par matage du bord libre (48) de la jupe (14) après montage du moyen de rappel (28) contre un épaulement de fond de jupe (14) puis montage de l'organe de verrouillage (31), de façon à former un sous-ensemble que l'on fixe ensuite à un corps central (11) du bouchon (1) par une extrémité de la jupe (14) opposée à son bord libre (48).

16. Dispositif d'obturation selon l'une des revendications 1 à 12, caractérisé en ce que le bouchon (1) comprend une jupe (14) qui lorsque le bouchon est vissé vient par un bord libre (48) en relation sensiblement étanche avec une région périphérique (49) de l'orifice (6) de manière à enfermer les moyens de verrouillage et de déverrouillage (12).

17. Dispositif d'obturation selon l'une des revendications 13 à 16, caractérisé en ce que le bord libre (48) de la jupe (14) vient se serrer en appui frontal contre la région périphérique (49) de l'orifice (6) lorsque le bouchon (1) est à l'état vissé.

18. Dispositif d'obturation selon l'une des revendications 13 à 17, caractérisé en ce que le filetage (2) est un filetage mâle et les moyens de verrouillage et de déverrouillage (12) sont agencés dans un logement annulaire (24) entre la jupe (14) et un corps central (11) du bouchon (1), portant le filetage (2) .

19. Dispositif d'obturation selon la revendication 18, caractérisé en ce que la jupe (14) est rapportée sur le corps (11) et présente, pour transmettre au corps (11) l'effort d'application du bord libre (48) de la jupe contre la région périphérique (49) de l'orifice, un épaulement (22) tourné à l'opposé du bord libre (48) et appuyé contre un épaulement correspondant (18) du corps (11), de manière que la jupe (14) fonctionne en entretoise tubulaire entre l'épaulement (18) du corps (11) et la région périphérique (49) de l'orifice (6) .

20. Dispositif d'obturation selon la revendication 19, caractérisé en ce que l'épaulement (18) du corps (11) appartient à une collerette (16) et la jupe (14) présente une lèvre de sertissage (21) rabattue sur la collerette (16) du côté opposé à l'épaulement (18) du corps (11).

21. Dispositif d'obturation selon l'une des revendications 1 à 20, caractérisé en ce que l'organe de verrouillage (47) solidaire en rotation de l'orifice (6) est une bague fixée dans un dégagement (46) ménagé autour de l'orifice.

## Patentansprüche

1. Verschlußvorrichtung, welche einen Deckel (1) aufweist, der auf eine Öffnung mit Gewinde (6) durch Verschrauben oder Lockern jeweils aufgebracht oder abgehoben werden soll, und einen ein Gewinde (2) tragenden Rumpf (11) und Sperrmittel (12), die einem unwillkührlichen Lockern des Deckels entgegenwirken, umfaßt,
**dadurch gekennzeichnet, daß** die Sperrmittel Mittel zur Verriegelung und Entriegelung (31, 28, 47) sind, die durch die Drehung des Deckels (1) und seiner Fortbewegung in Achsenrichtung automatisch aktiviert werden.

2. Verschlußvorrichtung nach Anspruch 1,
**dadurch gekennzeichnet, daß** die Mittel zur Verriegelung und Entriegelung (31, 28, 47) Mittel mit reversibler Verklinkung sind.

3. Verschlußvorrichtung nach Anspruch 2,
**dadurch gekennzeichnet, daß** die Mittel mit reversibler Verklinkung zwei Verriegelungsvorrichtungen (31, 47) aufweisen, wobei die eine mit dem Deckel (1) und die andere mit der Öffnung (6) drehfest verbunden ist, und daß diese beiden Verriegelungsvorrichtungen so angeordnet sind, daß sie beim Verschließen der Öffnung durch den Deckel in eine andere axial eindringen, unter dem Druck eines Rückstellmittels (28), das ein erstes (31) dieser Verriegelungsmittel in Richtung auf das andere (47) beansprucht.

4. Verschlußvorrichtung nach Anspruch 3,
**dadurch gekennzeichnet, daß** die Mittel mit reversibler Verklinkung so angeordnet sind, daß ausgehend von einem verschraubten und verriegelten Zustand des Deckels, das auf den Deckel (1) zur Entriegelung durch Lockerung anzuwendende Moment größer ist, als das zur Entriegelung in die Richtung einer zusätzlichen Verschraubung anzuwendende Moment.

5. Verschlußvorrichtung nach Anspruch 3 oder 4,
**dadurch gekennzeichnet, daß** wenn der Deckel (1) im verschraubten und verriegelten Zustand ist, die Mittel mit reversibler Verklinkung (31, 47) durch ihr axiales gegenseitiges Eindringen eine erste gemeinsame Abstützung erzeugen, die dem unwillkührlichen Lockern durch den Halt von zwei Kontaktseiten entgegenwirkt, welche bezüglich einer Radialebene um einen ersten Winkel (B) geneigt sind, der relativ groß und kleiner als 90° ist, und eine zweite gemeinsame Abstützung erzeugen, die dazu neigt, einer zusätzliche Verschraubung durch zwei Rampen entgegenzuwirken, welche bezüglich einer Radialebene um einen zweiten Winkel (A) geneigt sind, wobei dieser kleiner als der erste Winkel (B) ist.

6. Verschlußvorrichtung nach einem der Ansprüche 3 bis 5,
**dadurch gekennzeichnet, daß** wenigstens eines der Verriegelungsmittel (31, 47) eine ringförmige Verzahnung (42, 44) aufweist, deren Zähne etwa axial ausgerichtet sind.

7. Verschlußvorrichtung nach einem der Ansprüche 3 bis 6,
**dadurch gekennzeichnet, daß** das genannte erste Verriegelungsmittel (31), das von dem Rückstellmittel (28) beansprucht wird, relativ zum Gewinde (2), mit dem es verbunden ist, durch Führungsmittel (38, 39), die fern vom genannten damit verbundenen Gewinde (2) angeordnet sind, geführt wird

8. Verschlußvorrichtung nach einem der Ansprüche 3 bis 7,
**dadurch gekennzeichnet, daß** das Rückstellmittel (28) zum Deckel (1) gehört und daß das Rückstellmittel das mit dem Deckel (1) drehfest verbundene Verriegelungsmittel (31) axial in Richtung auf das Innere der Öffnung (6) beansprucht.

9. Verschlußvorrichtung nach Anspruch 8,
**dadurch gekennzeichnet, daß** das Verriegelungsmittel (31) des Deckels durch Verschiebung auf einem Rumpf (11) des Deckels geführt wird, dessen Gewinde (2) damit fest verbunden ist, wobei der Rumpf (11) und das Verriegelungsmittel des Deckels außerdem mit Mitteln zur gemeinsamen Verbindung bei Rotation ausgestattet sind.

10. Verschlußvorrichtung nach Anspruch 9,
**dadurch gekennzeichnet, daß** der Rumpf (11) des Deckels mit einem mit dem Gewinde versehenen Steckgewindeteil (2) axial ausgerichtet ist, so daß sich der Rumpf (11) außerhalb der Öffnung befindet, wenn der Deckel in einer Verschlußstellung relativ zur Öffnung ist.

11. Verschlußvorrichtung nach Anspruch 9 oder 10,
**dadurch gekennzeichnet, daß** das Rückstellmittel (28) eine schraubenförmige Feder ist, die um den Rumpf (11) herum, zwischen einer Schulter und dem Verriegelungsmittel (31), das ringförmig ausgeführt ist, angebracht ist.

12. Verschlußvorrichtung nach einem der Ansprüche 9 bis 11,
**dadurch gekennzeichnet, daß** das Verriegelungsmittel (31) des Deckels für seine Führung bei Verschiebung und seine drehfeste Verbindung auf der der Öffnung gegenüberliegenden Seite Keile (38) aufweist, welche in Kerben (39) eingreifen, die im Rumpf (11) gebildet sind.

13. Verschlußvorrichtung nach einem der Ansprüche 8 bis 12,
**dadurch gekennzeichnet, daß** der Deckel (1) eine Schürze (14) aufweist, die das mit dem Deckel verbundene Verriegelungsmittel (31) und das Rückstellmittel (28) von außen umgibt, und daß die Schürze (14) einen radial nach innen gerichteteten Umschlag (36) aufweist, der die unter dem Druck des Rückstellmittels (28) auftretende axiale Verschiebung des mit dem Deckel drehfest verbundenen Verriegelungsmittels (31) begrenzt.

14. Verschlußvorrichtung nach Anspruch 13,
**dadurch gekennzeichnet, daß** wenn der Deckel verschraubt ist, die Schürze (14) über einen freien Rand in eine in etwa dichte Verbindung mit einem Umfangbereich (49) der Öffnung (6) kommt, so daß die Verriegelungs- und Entriegelungsmittel umschlossen sind.

15. Verschlußvorrichtung nach Anspruch 13 oder 14,
**dadurch gekennzeichnet, daß** der Umschlag (36) durch Verstemmen des freien Randes (48) der Schürze (14) nach dem Anbringen des Rückstellmittels (28) gegen eine Schulter des Bodens der Schürze (14) und dem nachfolgenden Anbringen des Verriegelungsmittels (31) ausgeführt wird, so daß eine Unteranordnung gebildet wird, die danach mit einem Ende der Schürze (14) das ihrem freien Rand (48) gegenüberliegt an einem Mittelrumpf (11) des Deckels (1) befestigt wird.

16. Verschlußvorrichtung nach einem der Ansprüche 1 bis 12,
**dadurch gekennzeichnet, daß** der Deckel (1) eine Schürze (14) aufweist, die wenn der Deckel verschraubt ist, über einen freien Rand in eine in etwa dichte Verbindung mit einem Umfangbereich (49) der Öffnung (6) kommt, so daß die Verriegelungs- und Entriegelungsmittel (12) umschlossen sind.

17. Verschlußvorrichtung nach einem der Ansprüche 13 bis 16,
**dadurch gekennzeichnet, daß** der freie Rand (48) der Schürze (14) bei einem stirnseitigem Abstützen gegen den Umfangbereich (49) der Öffnung (6) angedrückt wird, wenn der Deckel (1) im verschraubten Zustand ist.

18. Verschlußvorrichtung nach einem der Ansprüche 13 bis 17,
**dadurch gekennzeichnet, daß** das Gewinde (2) ein Steckgewinde ist und die Verriegelungs- und Entriegelungsmittel (12) in einer ringförmigen Aufnahme (24) zwischen der Schürze (14) und dem Mittelrumpf (11) des Deckels (1), welcher das Gewinde (2) trägt, angeordnet sind.

19. Verschlußvorrichtung nach Anspruch 18,
**dadurch gekennzeichnet, daß** die Schürze (14) auf den Rumpf (11) aufgesetzt ist, und weist um auf den Rumpf (11) die Belastung des freien Randes (48) der Schürze gegen den Umfangbereich (49) der Öffnung zu übertragen eine dem freien Rand (48) abgewandte Schulter (22) auf, die sich gegen eine entsprechende Schulter (18) des Rumpfes (11) stützt, so daß die Schürze (14) als Zwischenrohr zwischen der Schulter (18) des Rumpfes (11) und dem Umfangbereich der Öffnung (6) wirkt.

20. Verschlußvorrichtung nach Anspruch 19,
**dadurch gekennzeichnet, daß** die Schulter (18) des Rumpfes (11) zu einem Kragen (16) gehört und die Schürze (14) eine Einfaßleiste (21) aufweist, die auf die Schulter (18) des Rumpfes (11) gegenüberliegenden Seite des Kragens (16) umgeschlagen ist

21. Verschlußvorrichtung nach einem der Ansprüche 1 bis 20,
**dadurch gekennzeichnet, daß** das mit der Öffnung (6) drehfest verbundene Verriegelungsmittel (47) ein Ring ist, der in einer um die Öffnung ausgebildete Aussparung (46) angebracht ist.

## Claims

1. Obturating device comprising a plug (1) intended to be placed on a threaded orifice (6) or to be removed from it, by screwing and unscrewing respectively, comprising a body (11) carrying a thread (2) and stop means (12) opposing the spontaneous unscrewing of the plug, characterized in that the stop means are locking and unlocking means (31, 28, 47) which are activated automatically by the rotation of the plug (1) and its corresponding progression in the direction of the axis.

2. Obturating device according to Claim 1, characterized in that the locking and unlocking means (31, 28, 47) are reversible ratchet engagement means.

3. Obturating device according to Claim 2, characterized in that the reversible ratchet engagement means comprise two locking members (31, 47), one of them being integral in rotation with the plug (1) and the other with the orifice (6), and in that these two locking members are positioned such that they mesh with one another axially when the plug (1) closes the orifice (6), under the thrust of a return means (28) applying force on a first (31) of these locking members in the direction of the other (47).

4. Obturating device according to Claim 3, characterized in that the reversible ratchet engagement means are designed such that, starting from a screwed in state of the plug, the torque to be applied to the plug (1) in order to unlock it by unscrewing is greater than the torque to be applied in order to unlock it in the sense of an additional screwing.

5. Obturating device according to Claim 3 or 4, characterized in that when the plug (1) is in the locked and screwed in state, the reversible ratchet engagement means (31, 47) define, by their axial meshing, a first mutual bearing opposing spontaneous unscrewing by the bearing together of two contact faces inclined at a first angle (B) which is relatively large, but less than 90°, with respect to a radial plane, and a second mutual bearing, tending to oppose additional screwing, by two ramps inclined at a second angle (A) with respect to the radial plane and which is smaller than the first angle (B).

6. Obturating device according to one of Claims 3 to 5, characterized in that at least one of the locking members (31, 47) comprises an annular set of teeth (42, 44) whose teeth are oriented substantially axially.

7. Obturating device according to one of Claims 3 to 6, characterized in that the said first locking member (31), forced by the return means (28), is guided with respect to the thread (2) with which it is associated by guidance means (38, 39) which are located apart from the said associated thread (2).

8. Obturating device according to one of Claims 3 to 7, characterized in that the return means (28) belongs to the plug (1) and applies an axial force towards the inside of the orifice (6) on the locking member (31) which is integral in rotation with the plug (1) .

9. Obturating device according to Claim 8, characterized in that the locking member (31) of the plug is slidingly guided over a body (11) of the plug, with which the thread (2) is integral, the body (11) and the locking member of the plug being furthermore provided with means of mutual connection in rotation.

10. Obturating device according to Claim 9, characterized in that the body (11) of the plug is axially aligned with a male threaded part (2) provided with the thread, such that the body (11) is outside of the orifice when the plug is in the closed position with respect to the orifice.

11. Device according to Claim 9 or 10, characterized in that the return means (28) is a coil spring fitted around the body (11) between a shoulder and the locking member (31), produced in the form of a ring.

12. Obturating device according to one of Claims 9 to 11, characterized in that for its sliding guidance and its rotational connection, the locking member (31) of the plug comprises, at the end remote from the orifice, keys (38) engaged in grooves (39) formed in the body (11).

13. Obturating device according to one of Claims 8 to 12, characterized in that the plug (1) comprises a skirt (14) externally surrounding the locking member (31) integral with the plug and the return means (28), and in that the skirt (14) has a radially inwardly directed rim (36) limiting the travel in axial translation, under the thrust of the return means (28), of the locking member (31) integral in rotation with the plug.

14. Device according to Claim 13, characterized in that, when the plug is screwed in, a free edge of the skirt (14) comes into a substantially sealing contact with a peripheral region (49) of the orifice (6) in such a way as to enclose the locking and unlocking means.

15. Obturating device according to Claim 13 or 14, characterized in that the rim (36) is produced by plastically deforming the free edge (48) of the skirt (14) after fitting the return means (28) against an end shoulder of the skirt (14) followed by the fitting of the locking member (31) in such as way as to form a subassembly which is then attached to a central body (11) of the plug (1) by an end of the skirt (14) which is remote from its free end (48).

16. Obturating device according to one of Claims 1 to 12, characterized in that the plug (1) comprises a skirt (14) of which, when the plug is screwed in, a free edge (48) comes into a substantially sealing contact with a peripheral region (49) of the orifice (6) in such a way as to enclose the locking and unlocking means (12).

17. Obturating device according to one of Claims 13 to 16, characterized in that the free edge (48) of the skirt (14) is tightened in abutment against the peripheral region (49) of the orifice (6) when the plug (1) is in the screwed in state.

18. Obturating device according to one of Claims 13 to 17, characterized in that the thread (2) is a male thread and the locking and unlocking means (12) are arranged in an annular housing (24) between the skirt (14) and a central body (11) of the plug (1), carrying the thread (2) .

19. Obturating device according to Claim 18, characterized in that the skirt (14) is mounted onto the body (11) and has, in order to transmit to the body (11) the force of application of the free edge (48) of the skirt against the peripheral region (49) of the orifice, a shoulder (22) facing away from the free edge (48) and bearing against a corresponding shoulder (18) of the body (11), in such a way that the skirt (14) functions as a tubular spacer between the shoulder (18) of the body (11) and the peripheral region (49) of the orifice (6).

20. Obturating device according to Claim 19, characterized in that the shoulder (18) of the body (11) is part of a collar (16) and the skirt (14) has a crimping lip (21) folded down over the collar (16) on the side remote from the shoulder (18) of the body (11).

21. Obturating device according to one of Claims 1 to 20, characterized in that the locking member (47) integral in rotation with the orifice (6) is a ring fixed in a recess (46) formed around the orifice.
